# EUROPEAN PATENT APPLICATION

(11) **EP 4 527 718 A1**
(43) Date of publication of application: **26.03.2025**
(21) Application number: 24200737.5
(22) Date of filing: 17.09.2024
(51) Int. Cl.: B62D 5/04

(54) **SYSTEM AND METHOD FOR STEERING HEALTH MONITORING**

(30) Priority: 19.09.2023 US 202363583764 P
(71) Applicant: Tusimple, Inc., San Diego, CA 92122 (US)
(72) Inventor: LI, ZONGZHENG, Tucson (US); SONG, JINGHUI, Tucson (US); BI, HAIMO, Tucson (US); HAN, XIAOLING, San Diego (US); DONALDSON, MICHAEL SCOTT, Covington (US)
(74) Representative: Morrall, Jonathan Ian McLachlan

(57) **Abstract**

Provided herein is a system and method for monitoring the health of a steering system of a vehicle. Methods can include: receiving location information and motion information associated with a vehicle (610); determining, from the location information, a map-matched road segment associated with the location information (620); establishing a geometry of the map-matched road segment based on map data of a map database (630); filtering the motion information associated with the vehicle to establish a baseline movement of the vehicle (640); determining, during the baseline movement of the vehicle, steering angle input received at a steering system of the vehicle (650); determining, from the steering angle input received at the steering system of the vehicle, a steering angle offset (660); and causing the steering angle offset to be applied to the steering system of the vehicle (670).

## Description

### TECHNOLOGICAL FIELD

An example embodiment of the present disclosure relates generally to a steering system of a vehicle, and more particularly, to a system for monitoring steering health during vehicle operation.

### BACKGROUND

Vehicle control requires control of a propulsion mechanism and a steering mechanism to drive a vehicle along a path. Propulsion mechanisms generally include a variety of engine types with different fuels, electric motors, or a combination thereof. Steering mechanisms include a range of mechanical and electro-mechanical devices to receive input, such as from a human driver, and convert the input into movement of wheels of the vehicle to control the aim of the vehicle along the path.

Control of a vehicle relies primarily on the vehicle speed and vehicle steering as these factors determine the path of a vehicle and the ability to maintain control of a vehicle as it travels along that path. Smaller, lighter vehicles are more nimble and more easily controlled, while larger and heavier vehicles, such as commercial trucks, are considerably more cumbersome and require more critical control strategies. The weight and momentum of commercial trucks as they travel along a path renders them more susceptible to variations in the path and thus require more accurate and precise control.

### BRIEF SUMMARY

A system and method are therefore provided for a steering system of a vehicle, and more particularly, to a system for monitoring steering health during vehicle operation. Embodiments provided herein include an apparatus including at least one processor and at least one non-transitory memory including computer program code instructions, the computer program code instructions configured to, when executed, cause the apparatus to at least: receive location information and motion information associated with a vehicle; determine, from the location information, a map-matched road segment associated with the location information; establish a geometry of the map-matched road segment based on map data of a map database; filter the motion information associated with the vehicle to establish baseline movement of the vehicle; determine, during the baseline movement of the vehicle, steering angle input received at a steering system of the vehicle; determine, from the steering angle input received at the steering system of the vehicle, a steering angle offset; and cause the steering angle offset to be applied to the steering system of the vehicle.

The apparatus of example embodiments is further caused to provide an indication of required maintenance in response to the steering angle offset satisfying a predetermined value. Causing the apparatus of some embodiments to filter the motion information associated with the vehicle to establish baseline movement of the vehicle includes causing the apparatus to filter the motion information associated with the vehicle to remove motion information associated with a map-matched road segment having a curved profile. Causing the apparatus of some embodiments to filter the motion information associated with the vehicle to establish baseline movement of the vehicle includes causing the apparatus to filter the motion information associated with the vehicle to remove motion information associated with a map-matched road segment having a grade above a predefined measure. Causing the apparatus of some embodiments to filter the motion information associated with the vehicle to establish baseline movement of the vehicle includes causing the apparatus to filter the motion information associated with the vehicle to remove motion information associated with a map-matched road segment subject to winds above a predetermined speed.

According to some embodiments, causing the apparatus to cause the steering angle offset to be applied to the steering system of the vehicle includes causing the apparatus to command compensation to the steering system of the vehicle in an amount of the steering angle offset. According to certain embodiments, causing the apparatus to determine, from the steering angle input received at the vehicle, a steering angle offset includes causing the apparatus to determine steering angle input relative to zero degrees of steering input during the baseline movement of the vehicle. According to some embodiments, causing the apparatus to determine, from the location information, the map-matched road segment associated with the location information includes causing the apparatus to determine, from the location information, a most likely road segment as the map-matched road segment based on the location information, a speed of the vehicle, and a heading of the vehicle.

Embodiments provided herein include a method for monitoring a steering system of a vehicle including: receiving location information and motion information associated with a vehicle; determining, from the location information, a map-matched road segment associated with the location information; establishing a geometry of the map-matched road segment based on map data of a map database; filtering the motion information associated with the vehicle to establish a baseline movement of the vehicle; determining, during the baseline movement of the vehicle, steering angle input received at a steering system of the vehicle; determining, from the steering angle input received at the steering system of the vehicle, a steering angle offset; and causing the steering angle offset to be applied to the steering system of the vehicle.

According to some embodiments, the method further includes determining a need for an alignment service of the steering system in response to the steering angle offset satisfying a predetermined value. According to some embodiments, filtering the motion information associated with the vehicle to establish the baseline movement of the vehicle includes filtering the motion information associated with the vehicle to remove motion information associated with a map-matched road segment having one or more turns along the map-matched road segment. According to some embodiments, filtering the motion information associated with the vehicle to establish the baseline movement of the vehicle includes filtering the motion information associated with the vehicle to remove motion information associated with a map-matched road segment having a banking above a predefined measure. According to some embodiments, filtering the motion information associated with the vehicle to establish the baseline movement of the vehicle includes filtering the motion information associated with the vehicle to remove motion information associated with a map-matched road segment determined to have winds in excess of a predetermined speed at a time of traversal of the map-matched road segment.

According to some embodiments, causing the steering angle offset to be applied to the steering system of the vehicle includes commanding compensation to the steering system of the vehicle in an amount of the steering angle offset. According to certain embodiments, determining from the steering angle input, the steering angle offset includes determining steering input angle relative to zero degrees of steering input during the baseline movement of the vehicle. According to some embodiments, determining, from the location information, the map-matched road segment associated with the location information includes determining, from the location information, a most likely road segment as the map-matched road segment based on the location information, a speed of the vehicle, and a heading of the vehicle.

Embodiments provided herein include a system for monitoring a steering system of a vehicle including a controller configured to: receive location information and motion information associated with a vehicle; determine, from the location information, a map-matched road segment associated with the location information; establish a geometry of the map-matched road segment based on map data of a map database; filter the motion information associated with the vehicle to establish baseline movement of the vehicle; determine, during the baseline movement of the vehicle, a steering angle input received at a steering system of the vehicle; determine, from the steering angle input received at the steering system of the vehicle, a steering angle offset; and cause the steering angle offset to be applied to the steering system of the vehicle.

According to some embodiments, the controller is further configured to provide an alert in response to the steering angle offset exceeding a predetermined degree, where the alert includes an indication of a need for an alignment service. According to some embodiments, the system further includes a steering assist system, where the controller configured to cause the steering angle offset to be applied to the steering system of the vehicle includes causing the steering assist system to compensate the steering system of the vehicle in an amount of the steering angle offset. The steering assist system of an example embodiment includes at least one of a hydraulic mechanism or an electric mechanism to impart compensation to the steering system of the vehicle in an amount of the steering angle offset.

### BRIEF DESCRIPTION OF THE DRAWINGS

Having thus described certain example embodiments of the present invention in general terms, reference will hereinafter be made to the accompanying drawings which are not necessarily drawn to scale, and wherein:
Figure 1 illustrates a top-view of a vehicle including at least one pair of steerable wheels according to an example embodiment of the present disclosure;
Figure 2 illustrates a steering mechanism according to an example embodiment of the present disclosure;
Figure 3 illustrates an example embodiment of a general system of example embodiments including identifying vehicle motion, data accumulation, determining steering angle offset, and the application of real-time compensation according to an example embodiment of the present disclosure;
Figure 4 illustrates an example embodiment of the identification of vehicle motion shown in Figure 3 with the filters depicted according to another example embodiment of the present disclosure;
Figure 5 illustrates the steerable wheels of Figure 2, illustrating "toe-in" and "toe-out" according to an example embodiment of the present disclosure;
Figure 6 illustrates camber alignment for a wheel according to an example embodiment of the present disclosure;
Figure 7 illustrates castor alignment for a wheel according to an example embodiment of the present disclosure;
Figure 8 illustrates a block diagram of a controller configured to control an active damping system according to an example embodiment of the present disclosure; and
Figure 9 illustrates a flow chart of a process for monitoring the health of a steering system of a vehicle according to an example embodiment of the present disclosure.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

Embodiments described herein generally relate to steering system of a vehicle, and more particularly, to a system for monitoring steering health during vehicle operation. The steering systems of example embodiments are applicable to on-road and off-road vehicles, as well as autonomous, semi-autonomous, and non-autonomous vehicles. Autonomous vehicle control, as described herein, includes vehicle control that is performed at least partially by a vehicle controller taking some responsibilities away from a human driver. Autonomous vehicle control can include semi-autonomous control, where certain functions are performed by a controller, while a human driver performs other functions, and fully-autonomous control, where a human driver is not necessary for control and navigation of the vehicle. Autonomous vehicle control, as described herein, includes this array of control possibilities such that the term "autonomous vehicle control" can include any degree of autonomous control ranging from minimal autonomy to fully autonomous. While not necessarily required, a driver may remain present in fully-autonomously controlled vehicles to intervene as necessary, and to monitor autonomous performance.

The Society of Automotive Engineers (SAE) has defined six levels of driving automation that range from level zero, in which there is no automation and a driver controls all vehicle functions (steering, braking, acceleration, etc.) to level five, in which the vehicle autonomously controls all vehicle functionality, not requiring a driver to be present. Level one includes some minimal degree of driver assistance, such as through cruise control. Level two includes partial automation, which may include an ADAS (Advanced Driver Assistance System) that can perform steering and acceleration among other controls; however, a driver is still ultimately in control of the vehicle. Level three is conditional automation, where the vehicle can detect and monitor an environment of the vehicle, and the vehicle can perform most control tasks. In level three, a human override is still necessary. Level four is a high degree of automation where the vehicle performs all tasks under specific circumstances, though a human override is still available. In level five automation, no human input is needed to control the vehicle. Embodiments described herein can be implemented in any of the aforementioned levels of automation as will be described further below.

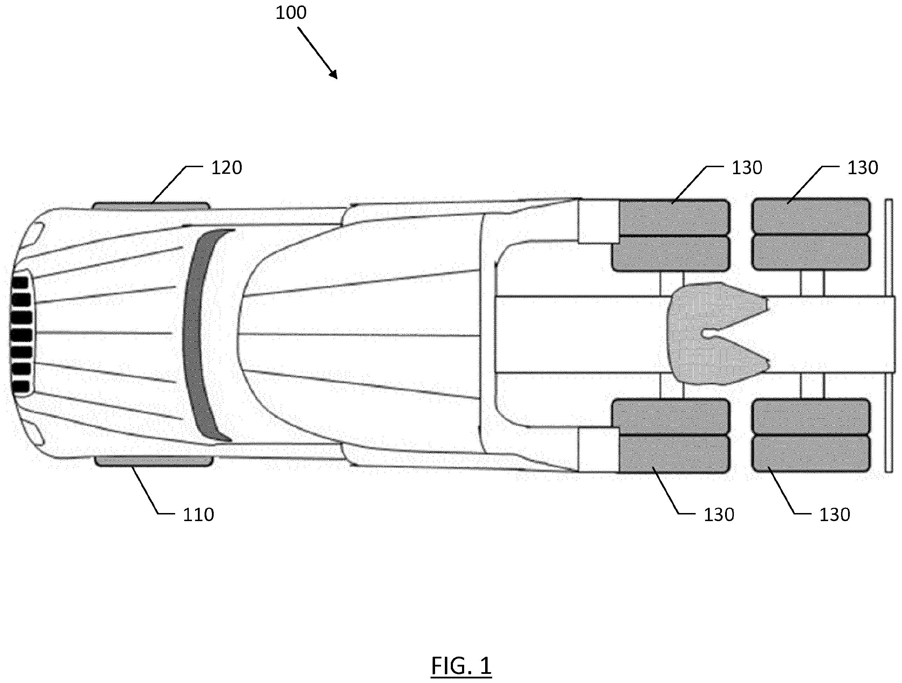

Steering systems for wheeled vehicles include a variety of techniques that generally transmit rotational input of a steering shaft, generally receiving input through a steering wheel, to linear output, where the linear output translates the steerable wheels of the vehicle to cause the vehicle to turn left or right. Figure 1 illustrates an example embodiment of a vehicle 100, which in the illustrated embodiment is a class 8 tractor. The vehicle includes a pair of steerable wheels including a left steerable 110 wheel and a right steerable wheel 120. The vehicle 100 also includes driven wheels 130. In some cases, driven wheels of a vehicle can also be steerable wheels, such as in front-wheel drive and all-wheel-drive vehicles, or in vehicles with more than one pair of steerable wheels (e.g., all-wheel steering). Embodiments of the present disclosure can be implemented in any steerable wheel of a vehicle, as will be appreciated by one of skill in the art.

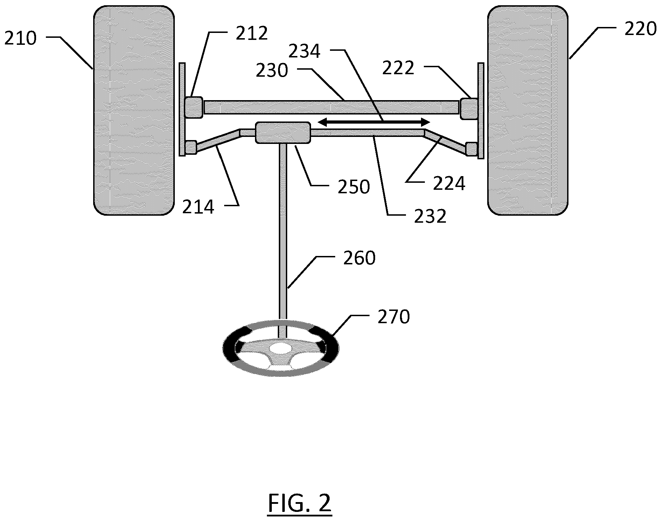

Figure 2 illustrates a simplified embodiment of a steering system. The illustrated embodiment is one of a variety of steering configurations and types that can implement embodiments of the present disclosure. In some embodiments, more, fewer, or different components of the steering system may be implemented. The illustrated embodiment includes a left steerable wheel 210 and a right steerable wheel 220, with the left steerable wheel connected to a left steering knuckle 212 and the right steerable wheel connected to a right steering knuckle 222. The steering knuckles pivot about a substantially vertical axis (e.g., substantially orthogonal to the illustrated image) enabling the steerable wheels to rotate and turn left and right relative to the vehicle. An axle 230 is present in some embodiments, such as a solid-axle front end. In some embodiments, such as a front-wheel drive vehicle, the axle 230 may be embodied by a pair of half shafts that connect at one end to a respective wheel, and are driven at the other end, such as through a transmission, transaxle, or differential. In some embodiments, there is no axle 230 or half shafts, such as in a vehicle with independent front suspension and without the front wheels being driven wheels.

The left steering knuckle 212 is connected to a steering member 232 via left tie rod 214, while the right steering knuckle 222 is connected to the steering member 232 by the right tie rod 224. The steering member 232 of the illustrated embodiment is connected to a steering box 250. The steering box 250 can include a rack-and-pinion type gear interface between the steering member 232 (e.g., the rack) and a steering shaft 260. The steering shaft 260 is turned by the steering wheel 270 by an operator. Rotation of the steering shaft 260 is translated to linear movement by the steering box 250, such that the steering member moves laterally along arrow 234. The movement of the steering member translates to movement of each steering knuckle about the substantially vertical axis to rotate the steerable wheels left and right.

Steering configurations can take a variety of forms, such as embodiments that do not employ a rack-and-pinion type system, but may employ a pitman arm to translate rotational input of the steering shaft to lateral movement of a steering member. A worm-gear arrangement in a steering box can optionally be employed to translate the rotational input of the steering shaft into lateral movement that translates the steerable wheels. Each of these types of steering mechanisms that translates motion from an input to the steerable wheels can employ embodiments of the present disclosure to mitigate unwanted input to the steering system from the steerable wheels, as will be apparent to one of ordinary skill in the art.

According to embodiments of the steering system described herein, there exists a mechanical connection between the steerable wheels and the steering wheel. This mechanical connection serves to efficiently and effectively take steering input at the steering wheel and produces steering output at the steerable wheels. Further contemplated are systems in which steering-by-wire may exist, where there is either no mechanical connection between the steerable wheels and the steering wheel, or there exists a mechanical back-up between the steerable wheels and the steering wheel. A mechanical back-up can include a hydraulic steering system where any electrical failures or manual override results in actuation of the hydraulic link between the steering wheel and the steerable wheels. Such systems for braking are presently employed in a variety of vehicles, and a similar implementation for steering systems is likely forthcoming.

Steering the steerable wheels of a vehicle is of critical importance for safe control and operation of the vehicle. While small and light vehicles can be nimble in traffic and on roads with significant or tight curves, larger and heavier vehicles require greater levels of control as they are slower to react to dynamic changes of a roadway or traffic on the roadway. Larger vehicles, such as commercial trucks, are substantially wider than a conventional passenger car, and therefore must maintain precise control particularly in areas of relatively narrow lanes and tight bends in a road. Steering and braking of such large vehicles requires planning as the vehicle traverses road segments. In order for the safe and efficient operation of a vehicle, and particularly large and heavy vehicles, the vehicle control systems need to be maintained in proper working order. Embodiments described herein help ensure that vehicle control systems are properly maintained and provide both real-time control system corrections and recommendations regarding service requirements.

Steering systems, such as the arrangement depicted in Figure 2, involve a number of mechanical parts and linkages. The steerable wheels are also connected to the vehicle through a suspension system to mitigate travel surface anomalies while providing a relatively smoother ride for the vehicle relative to a fixed connection between the wheels and the vehicle. These suspension components add complexities to the steering system, as the wheel locations change in a substantially vertical direction as the vehicle traverses a road segment. The steering components therefore have some degree of flexibility in their connections between the steerable wheels 210, 220 and the steering box 250. Over time, by virtue of vibrations, suspension travel, significant impacts to the steerable wheels, and other factors can cause the steering system to become misaligned.

Alignment of the steering system refers to the centering of a steering system and a true, straight track of the steerable wheels. Steering mechanisms often have a centering mechanism to center the steering system in a neutral position, whereby the steerable wheels are intended to be in a position that corresponds to a straight, forward path of the vehicle. The wheels may not be parallel to this straight, forward direction as wheels often have some degree of toe-in, which can be used to reduce responsiveness of steering input (e.g., less "wandering" within a lane), but can also increase steering stability at higher speeds. The centering mechanism of a steering system can be in the form of spring bias, hydraulic bias, electric assist, etc. which causes the steering mechanism to return to a center point. However, as the steering components described above experience significant vibrations, bumps, and other feedback, the steerable wheels may become misaligned with the steering system, whereby when the steering system is centered, the track of the vehicle may not be straight forward. Further, tires that are symmetrical when new may become uneven through wear, and such uneven wear can degrade the performance of the overall steering system.

This misalignment between the steering system and the steerable wheels can be problematic as it can cause a vehicle to wander within a lane, or require regular correction to maintain a desired path of the vehicle. Embodiments described herein mitigate the issues of misalignment of steering, and monitor the health of a steering system of a vehicle to ensure the steering system is maintained in proper working order.

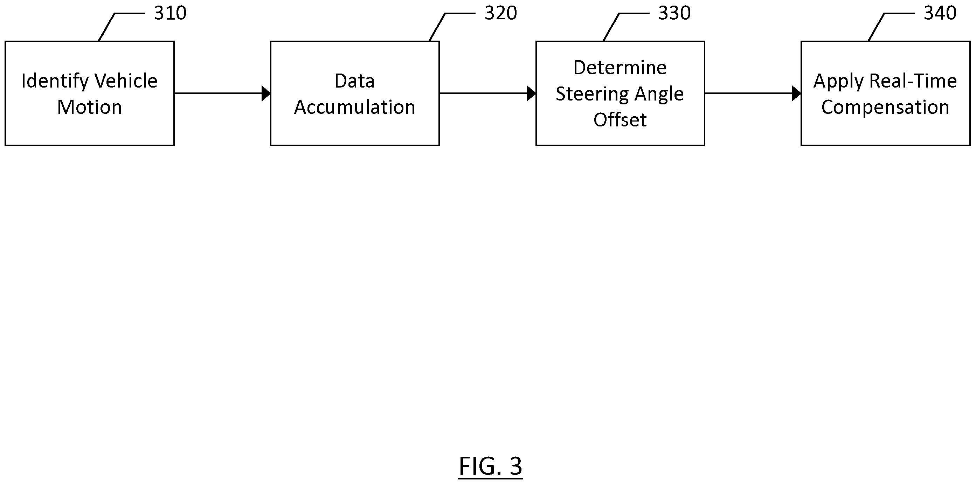

Figure 3 illustrates an example embodiment of a general system of example embodiments including identifying vehicle motion 310, data accumulation 320, determining steering angle offset at 330, and the application of real-time compensation 340. The identification of vehicle motion can be a cumbersome task. A variety of factors influence vehicle motion, including vehicle control input, the road segment(s) along which a vehicle is moving, other vehicles and obstacles along a road segment, and environmental factors such as weather.

Vehicle movement is generally performed on mapped roadways. A map database can be used to identify roadways of a geographical area, and a position of a vehicle within the roadways of the geographical area can be established by systems such as GNSS (Global Navigation Satellite Systems), cellular triangulation, environmental object detection (e.g., signs, map-based objects, etc.) or the like. The location of a vehicle as identified through some of these systems may be map-matched using a map-matching algorithm to correlate the raw position of a vehicle with a road segment. This map-matching process may be necessary as the accuracy of some localization systems may not be sufficient to pinpoint a specific road segment, such that map-matching may be necessary. For example, GPS (Global Positioning System) may have accuracy as low as within about sixteen feet even in open-sky environments, with the accuracy further degraded based on buildings (e.g., urban canyons), tree cover, or the like. In an example, a vehicle traveling along a highway with a parallel service road may be determined to be on either the service road or the highway based on raw position data. However, a speed of the vehicle may be used to correlate the vehicle with either the highway (e.g., if the vehicle speed is relatively high), or the service road (e.g., if the vehicle speed is relatively low). Map-matching can also use a heading of a vehicle to establish a map-matched road segment. If a vehicle heading fails to correspond to a travel direction of a road segment, it is unlikely that the road segment is the correct road segment along which the vehicle is traveling. Such map-matching enables accurate identification of a road segment along which a vehicle is traveling. There are roadways that exist that are not within a map database of roads, such as some private drives or unimproved roadways; however, as the most traveled roads are found in digital map databases, these roadways not found within map databases are inconsequential.

In addition to the identification of road segments along which a vehicle is traveling, map databases may have dynamic data, such as traffic information. Vehicle movement along road segments is influenced by traffic, and embodiments described herein can consider such traffic levels in evaluating vehicle movement.

Determining the position of a vehicle along a road segment enables a determination of what type of road segment the vehicle is on, and determination of the properties of a road segment. In the identification of vehicle motion at 310, the path of a vehicle can be analyzed relative to a road segment along which the vehicle is traveling. To establish the health of a steering system of a vehicle, it is desirable to have a baseline from which to determine vehicle movement along road segments. Road segments with curved profiles, heavy traffic, significant turns, or other obstacles that cause irregular movement of a vehicle may not be useful in establishing baseline movement of a vehicle. Baseline movement is most accurately obtained from road segments that are known to be straight (e.g., from the map database), have steady-state travel at moderate-to-high speeds (e.g., not in traffic), and have no significant outside environmental influences (e.g., weather such as wind).

According to example embodiments described herein, vehicle motion is captured as the vehicle travels within a road network. Vehicle motion that is not on a straight roadway with steady-state travel speeds and no significant outside environmental influences may be discarded such that baseline movement of the vehicle remains. Vehicle motion may be filtered further based on identified motion of the vehicle along the road segments. For example, vehicle lane changes may be identified by autonomous vehicle controls, by localization techniques, and by road object detection (e.g., lane lines) among other options. Vehicle motion with such lane changes may be filtered out as such vehicle motion requires steering input to achieve the lane changes.

Still further vehicle motion may be filtered based on additional factors. Vehicles, and particularly vehicles with some degree of autonomy, are often equipped with IMUs (Inertial Measurement Units). The IMUs measure lateral acceleration signals and can be used for vehicle motion estimation. Vehicle motion can be filtered to eliminate vehicle movement from baseline movement based on lateral acceleration measured by the IMU. This enables the system of example embodiments to obtain clean baseline movement information of the vehicle when the vehicle is traveling along a straight road segment at a steady state without lane changes or lateral movement.

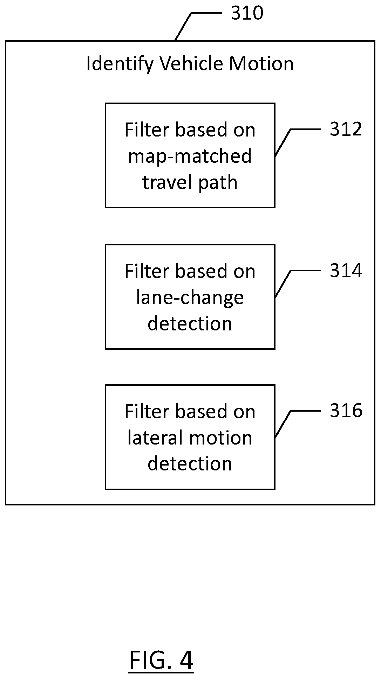

Figure 4 illustrates an example embodiment of the identification of vehicle motion 310 shown in Figure 3 with the filters depicted. As shown, and in no particular order, vehicle motion is filtered based on map-matched travel paths at 312. This may include the identification of steady-state travel and any traffic that can adversely impact baseline movement of the vehicle. At 314, the vehicle motion is filtered based on lane-change detection through lane change flags identified through cameras (e.g., map object detection), autonomous vehicle flags, or localization techniques. At 316, vehicle motion is filtered based on lateral motion detection, such as through an IMU. The output from identification of vehicle motion 310 is clean, baseline movement of the vehicle in a straight line at a steady state.

Returning to Figure 3, the clean, baseline movement of the vehicle is accumulated in data accumulation operation shown at 320. Data accumulation is performed to obtain multiple samples of clean, baseline movement of the vehicle. As there are many factors that can influence vehicle motion, the greater number of samples of baseline movement that are accumulated leads to greater confidence in the steering health evaluation.

Through data accumulation, the average steering position may be established along clean, baseline movement of the vehicle. The anticipated and expected average steering position should be zero degrees of turn for straight forward driving. That is, the steering wheel or other steering input should be at net zero during straight forward driving. If the collected, accumulated data indicates that the average steering angle of a steering input, such as a steering wheel, is not near zero, this average steering angle can be established as a degradation in steering performance and accuracy. Steering input received while maintaining a straight line on a straight road should be minimal. Consistent steering input at a non-zero angle is considered deviation from the ideal steering alignment. The deviation of the average steering angle from zero degrees can be determined as the steering angle offset as shown at 330 of Figure 3. The volume of data accumulated at 320 can provide an indication of the accuracy of the steering angle deviation. A large volume of data can indicate a higher confidence in the steering angle deviation, while a lower volume of data may suggest there is insufficient vehicle motion data to accurately indicate a steering angle deviation. Further, there can be a confidence level associated with each instance of the accumulated data.

Vehicle motion data that passes all filters in the identification of vehicle motion at 310 can still include data that may not be entirely accurate. While the filter based on lateral motion detection 316 can filter some degree of laterally-motion of a vehicle, if a vehicle is traveling in an environment that has high cross-winds, the steering angle compensation to keep the vehicle moving straight may not be seen as lateral motion, and may register as steering angle misalignment. Certain roads may have a propensity to have high cross winds. Vehicle motion determined to have occurred along a straight road having steady state speeds, with no lane changes and no lateral motion that includes a non-zero steering angle may have a low-confidence of accurately reflecting the steering alignment if gathered along a road known for high cross-winds. For example, Interstate 90 across the plains of South Dakota is a generally straight, long section of highway that usually has consistent, steady-state speeds. Such a road would appear ideal for collecting baseline vehicle motion to establish steering system alignment. However, this same stretch of highway is prone to high cross-winds based on the topography. Thus, vehicle motion data collected along this stretch of road may be deemed of low confidence, particularly if there is a non-zero steering angle along the road. The degree of cross-winds may be considered in establishing whether vehicle motion along a road segment is valid as baseline movement. For example, if the winds are above a predetermined speed, or if the area experiences winds above the predetermined speed with regularity, that area may be inappropriate for establishing baseline movement.

The confidence of collected data can be enhanced based on data associated with a particular location. In the aforementioned example, vehicle motion data collected along a road segment that often has high cross-winds may have a confidence value established based, at least in part, on local weather conditions. While winds may be present, if local weather conditions indicate that the winds are calm at the time of collection of vehicle motion, the vehicle motion collected may be given a high degree of confidence as the road segment has favorable characteristics for baseline movement other than the chance of winds.

In addition to road segments subject to cross-winds, map data of a map database can be high-definition map data, that includes detailed information pertaining to road segments of a road network. This data can include banking of a road segment and slope of a road segment. Road segments often have a particular grade or crown across a width of the road segment. Banking of a road may help with roadholding and handling of vehicles traveling along a road segment. Grading or crowning of a road segment may be used to help water run-off, which helps avoid water pooling and keeps road segments drier than without such grading. In some cases, the banking, grading, or crown of a road segment may be sufficiently significant as to require a driver to perform corrective steering adjustments to maintain position within a lane. This type of correction may not be due to steering alignment, such that a map database that includes information relating to road grade may be leveraged to identify where steering corrections are made that are not due to a steering angle offset. This can render data collected on certain road segments of low-confidence for determining steering angle offsets. A road segment having a grade above a predefined measure may not be appropriate for establishing baseline movement. Similarly, a road segment having a banking above a predefined measure may be inappropriate for establishing baseline movement.

Once sufficient vehicle motion data is collected reflecting baseline motion, the steering angle offset can be determined as shown at 330 of Figure 3. The steering angle offset is ideally zero for baseline movement of a vehicle. An angle different from zero can indicate a potential problem with at least one component of the steering system, indicating a need for maintenance. Using embodiments of the system and method described herein, the steering offset angle reflecting a misalignment of the steering system with a true steering system (zero degree steering angle, straight forward path) can be determined with a high level of accuracy. The steering angle offset that is determined can be used in a variety of manners.

According to an example embodiment, the steering angle offset that is determined at 330 shown in Figure 3 can be used to apply real-time compensation to steering at 340. This real-time compensation to steering effectively re-calibrates the steering system such that the steering offset angle becomes the new zero-degree steering angle. Application of a steering angle offset is not feasible in all vehicles. The application of a steering angle offset is however possible in vehicles that are drive-by-wire or that have a level of autonomy that includes steering capabilities. The offset can be applied at the steerable wheels, rendering the steering wheel appearing normal to a driver (e.g., steering wheel level for straight forward driving). According to some embodiments with a fully mechanical interface between the steering wheel and the steerable wheels, the application of a steering offset angle may adjust the position of the steering wheel. However, the adjustment would result in the steering wheel returning to the applied offset angle when a driver is not applying a force to the steering wheel. The application of the steering angle offset can be applied, for example, by an electric motor or hydraulic motor that may be present in a steering system for power-assisted steering and/or for autonomous control of the steering.

The application of real-time compensation through a steering angle offset can help a driver maintain a better, more true path along a road segment as they are not applying steering effort to maintain a straight path on a straight road. This real-time steering calibration improves safety by enabling a driver to maintain a more accurate and precise path along a road segment, while also reducing driver fatigue. Drivers that are compensating for a steering angle misalignment are constantly fighting against a bias of the steering mechanism, which attempts to pull the steering to an angle offset from a straight forward direction. This adds to the cognitive and physical load of a driver, and diminishes the driver's capacity for additional stimuli and inputs. Thus, a misaligned steering system of a vehicle can be detrimental to vehicle safety.

The re-calibration of a steering system may only be necessary after a predetermined amount of steering angle offset. The minimum steering angle offset to prompt a re-calibration or application of real-time compensation may be, for example, one degree of steering angle offset.

In addition to or instead of application of a steering angle offset compensation, embodiments can use the determined steering angle offset to flag a maintenance condition. Steering alignment can be corrected using alignment tools; however such tools include a complex array of leveling jigs and lasers. Further, steering alignment is performed in maintenance shops equipped with sufficient tools to perform the alignment. As the equipment to perform a proper alignment can be expensive, the maintenance shops able to accommodate alignment, particularly for large commercial vehicles, may be limited. Thus, it is desirable to understand when an alignment is necessary versus when an alignment may be scheduled through maintenance routines, as maintenance routines are based on what may occur, while embodiments described herein are based on what is actually occurring at the vehicle.

A steering angle offset and the degree thereof may provide an indication of when a steering alignment service is needed, and how urgently such a service should be scheduled. A steering angle offset below a predefined threshold may indicate a steering alignment service is needed, but not urgently. A steering angle offset above another predefined threshold may indicate a steering alignment service is urgently needed. When a steering angle offset is determined to exceed a predetermined degree, an alert may be generated and provided as an indication of a need for an alignment service. The alert may be provided to a driver, to a vehicle owner, to a vehicle maintenance staff, or a combination thereof. According to some embodiments, the steering alignment offset can be tracked over time to indicate an issue that is exacerbating the steering alignment. This can be, for example, unequal tire wear, which can itself be caused by a steering alignment offset. Unequal tire wear can be due to other factors, such as unequal tire pressure, vehicle loading issues (e.g., differences in suspension components such as a deteriorating shock absorber or spring), or differences in the various axes of alignment of a wheel.

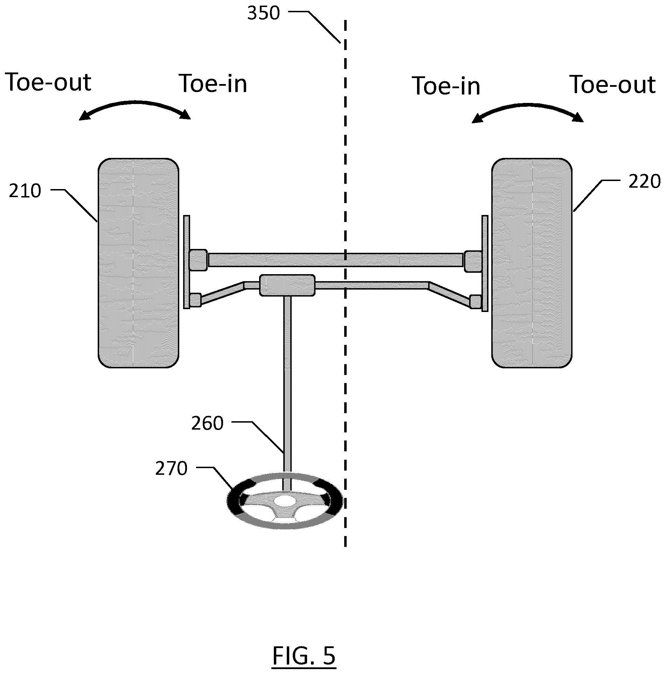

While the above description references a steering alignment offset and determination of steering alignment through input at a steering wheel during driving along a straight road segment, the alignment issue is not limited to between a steering input and the direction of the steerable wheels. Further, the steering alignment issue can be caused by alignment of the wheel based on suspension component positions. There are three types of alignment for each wheel. Figure 5 illustrates the steerable wheels 210, 220 of Figure 2, illustrating "toe-in" where a forward end of a wheel is biased toward a center line 350 of the vehicle, while an aft end of that wheel is biased away from the center line of the vehicle. Toe-out is the opposite of toe-in, while "zero toe" is achieved where a front of a wheel is the same distance from the center line 350 of the vehicle as the aft end of the wheel. Some degree of toe-in may be desirable in certain circumstances. However, in a road-going vehicle, the degree of toe-in or toe-out is generally equal on both sides of the vehicle.

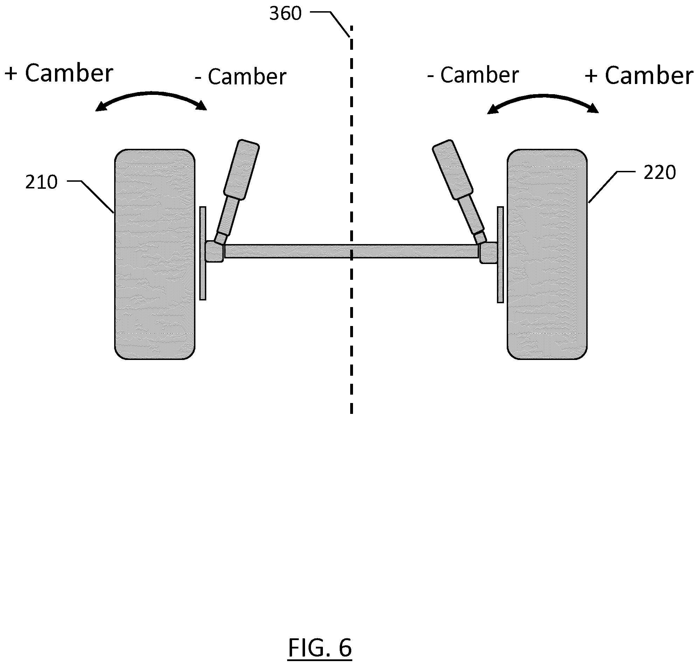

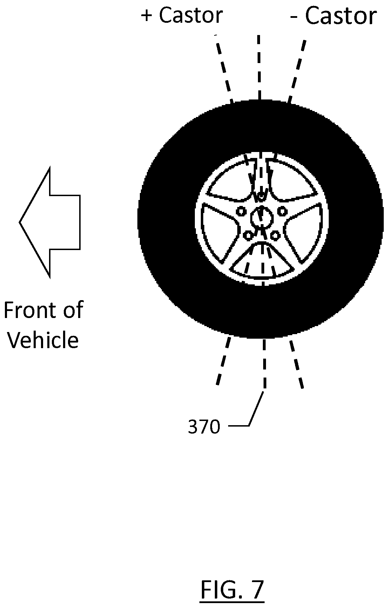

Figure 6 illustrates camber of wheel alignment geometry. Positive camber is achieved when a top side of a wheel is further away from a center line 360 of the vehicle than a bottom side of the wheel. Negative camber is achieved when a top side of a wheel is closer to the center line 360 of the vehicle than the bottom side of the wheel. Finally, castor alignment is illustrated in Figure 7, where castor alignment is found in the suspension geometry and relates to the axis about which the wheel pivots when turned for steering. Positive castor occurs when a top side of the axis 370 about which a wheel steers is closer to a front of a vehicle. Negative castor occurs when the top side of the axis 370 about which the wheel steers is further from a front of the vehicle. Zero castor occurs when the axis 370 about which the wheel steers is vertical.

Steering and suspension geometries can degrade over time, particularly when a vehicle encounters rough terrain or substantial vibration. The steering misalignment through a steering angle offset can be caused by misalignment of the steering system. However, the steering misalignment may also be caused by misalignment through any of the aforementioned vehicle wheel alignment axes. Each of these can itself produce a steering misalignment. Further, if tire wear due to suspension geometry is uneven, the wheel alignment can lead to steering misalignment or exacerbate steering misalignment.

In order to determine the steering angle offset as described above based on the accumulated and filtered data, embodiments described herein can employ a vehicle control unit to collect and filter the vehicle motion data. The vehicle control unit can further have available map data, used to identify road segments along which the vehicle is traveling, and properties of those road segments in order to filter the vehicle motion data as described above. The vehicle control unit can further be employed to determine the steering angle offset, and apply real-time compensation as described above.

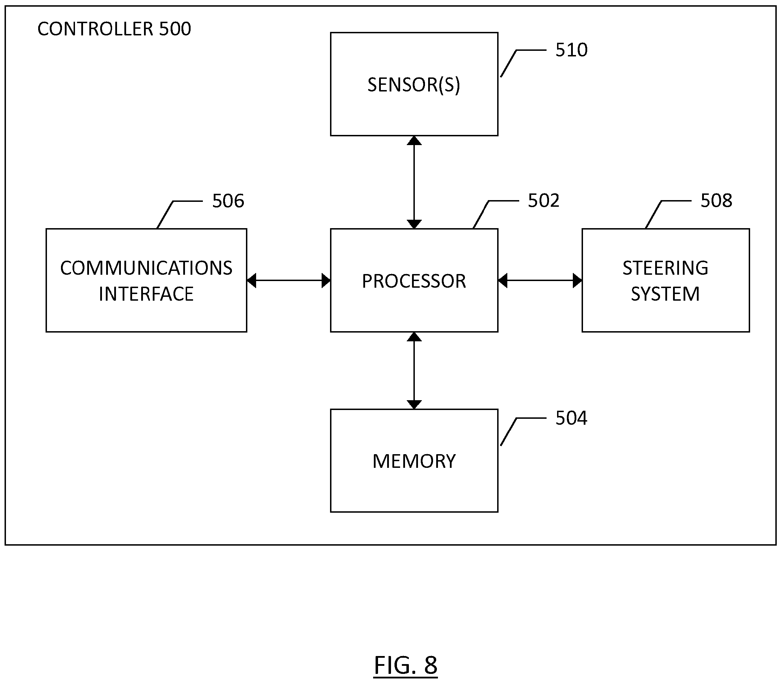

Figure 8 is a schematic diagram of an example of a controller 500 that may be implemented to, either directly or indirectly, identify vehicle motion, accumulate and filter motion data to determine baseline movement, and to determine a steering angle offset based on the accumulated, filtered data. The controller 500 can further provide, directly or indirectly, the real-time compensation to a steering system to re-calibrate and compensate for the steering angle alignment.

The controller 500 illustrated in Figure 8 may include or otherwise be in communication with a processor 502, a memory 504, a communications module 506, a steering system 508, and sensor(s) 510. As such, in some embodiments, although devices or elements are shown as being in communication with each other, hereinafter such devices or elements should be considered to be capable of being embodied within the same device or element and thus, devices or elements shown in communication should be understood to alternatively be portions of the same device or element.

In some embodiments, the processor 502 (and/or co-processors or any other processing circuitry assisting or otherwise associated with the processor) may be in communication with the memory 504 via a bus for passing information among components of the apparatus. The memory 504 may include, for example, one or more volatile and/or non-volatile memories. In other words, for example, the memory 504 may be an electronic storage device (e.g., a computer readable storage medium) comprising gates configured to store data (e.g., bits) that may be retrievable by a machine (e.g., a computing device like the processor). For example, the memory 504 could be configured to buffer input data for processing by the processor 502. Additionally or alternatively, the memory device could be configured to store instructions for execution by the processor.

The processor 502 may be embodied in a number of different ways. For example, the processor 502 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor 502 may include one or more processors configured in tandem via the bus to enable independent execution of instructions, pipelining and/or multithreading. The processor may be embodied as a microcontroller having custom bootloader protection for the firmware from malicious modification in addition to allowing for potential firmware updates.

In an example embodiment, the processor 502 may be configured to execute instructions stored in the memory 504 or otherwise accessible to the processor 502. Alternatively or additionally, the processor 502 may be configured to execute hard coded functionality. As such, whether configured by hardware or software methods, or by a combination thereof, the processor 502 may represent an entity (e.g., physically embodied in circuitry) capable of performing operations according to an embodiment of the present disclosure while configured accordingly. Thus, for example, when the processor 502 is embodied as an ASIC, FPGA or the like, the processor 502 may be specifically configured hardware for conducting the operations described herein. Alternatively, as another example, when the processor 502 is embodied as an executor of software instructions, the instructions may specifically configure the processor 502 to perform the algorithms and/or operations described herein when the instructions are executed. However, in some cases, the processor 502 may be a processor of a specific device (e.g., a vehicle control module) configured to employ an embodiment of the present disclosure by further configuration of the processor 502 by instructions for performing the algorithms and/or operations described herein. The processor 502 may include, among other things, a clock, an arithmetic logic unit (ALU) and logic gates configured to support operation of the processor 502. In one embodiment, the processor 502 may also include user interface circuitry configured to control at least some functions of one or more elements of the steering system 508.

The sensor(s) 510 can include various types of sensors embodied by or in communication with the controller 500. For example, the sensors can include accelerometers to determine lateral movement of the vehicle. In such an embodiment, the sensor(s) 510 can include, for example, an inertial measurement unit (IMU). The sensor(s) 510 can also include a steering angle sensor used to identify the steering angle input received at the steering system of a vehicle, for example. Various other sensors can be employed by embodiments described herein to facilitate the system for monitoring steering health during vehicle operation.

The communications module 506 may include various components, such as a device or circuitry embodied in either hardware or a combination of hardware and software that is configured to receive and/or transmit data for communicating data between a steering system, damping system, and vehicle controller as described herein. In this regard, the communications module 506 may include, for example, an antenna (or multiple antennas) and supporting hardware and/or software for enabling communications wirelessly. Additionally or alternatively, the communications module 506 may be configured to communicate via wired communication with other components of a vehicle or a computing device as described herein.

The steering system 508 may be in communication with the processor 502 to receive an indication of a steering rate of change, vehicle movement, vehicle speed, or the like, which may be provided, for example, by sensor(s) 510. The steering system 508 may also be in communication with the memory 504 and/or the communications module 506, such as via a bus.

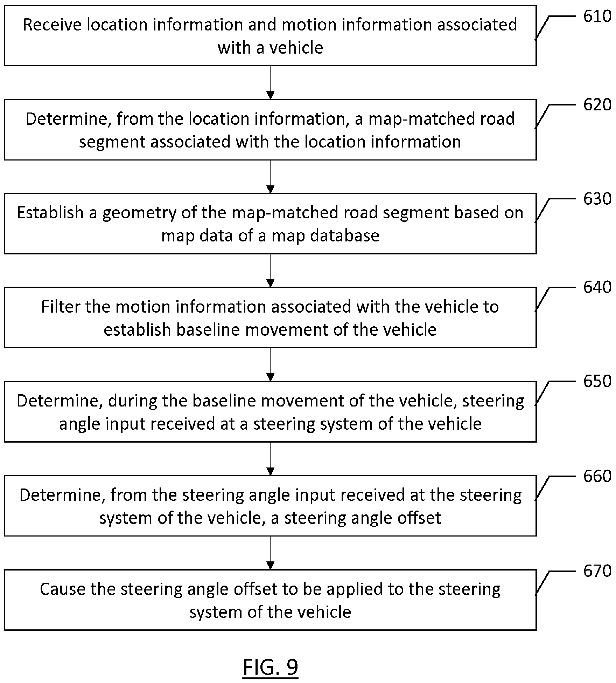

Figure 9 illustrates a flowchart of a method for monitoring the health of a steering system of a vehicle. As shown, location information and motion information associated with a vehicle is received at 610. From the location information, a map-matched road segment associated with the location information is determined at 620. A map geometry is established at 630 for the map-matched road segment based on map data of a map database. The motion information associated with the vehicle is filtered at 640 to establish baseline movement of the vehicle. During the baseline movement of the vehicle, steering angle input received at a steering system of the vehicle is determined at 650. A steering angle offset is determined at 660 from the steering angle input received at the steering system of the vehicle. The steering angle offset is caused to be applied to the steering system of the vehicle at 670.

As described above, Figure 9 illustrates a flowchart of methods, computer program products, and systems according to an example embodiment of the disclosure. It will be understood that each block of the flowchart, and combinations of blocks in the flowchart, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by the memory 504 of a controller 500 employing an embodiment of the present invention and executed by the processor 502 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks.

These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In an example embodiment, an apparatus for performing the method of Figure 9 above may comprise a processor (e.g., the processor 502) configured to perform some or each of the operations (610-670) described above. The processor may, for example, be configured to perform the operations (610-670) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 610-670 may comprise, for example, the processor 502 and/or a device or circuit for executing instructions or executing an algorithm for processing information as described above.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Also disclosed herein are the following numbered clauses:
1. An apparatus including at least one processor and at least one non-transitory memory including computer program code instructions, the computer program code instructions configured to, when executed, cause the apparatus to at least:
   receive location information and motion information associated with a vehicle;
   determine, from the location information, map-matched road segment associated with the location information;
   establish a geometry of the map-matched road segment based on map data of a map database;
   filter the motion information associated with the vehicle to establish baseline movement of the vehicle;
   determine, during the baseline movement of the vehicle, steering angle input received at a steering system of the vehicle;
   determine, from the steering angle input received at the steering system of the vehicle, a steering angle offset; and
   cause the steering angle offset to be applied to the steering system of the vehicle.
2. The apparatus of clause 1, wherein the apparatus is further caused to:
   provide an indication of required maintenance in response to the steering angle offset satisfying a predetermined value.
3. The apparatus of clauses 1 or 2, wherein causing the apparatus to filter the motion information associated with the vehicle to establish baseline movement of the vehicle comprises causing the apparatus to:
   filter the motion information associated with the vehicle to remove motion information associated with a map-matched road segment having a curved profile.
4. The apparatus of any of clauses 1 through 3, wherein causing the apparatus to filter the motion information associated with the vehicle to establish baseline movement of the vehicle comprises causing the apparatus to:
   filter the motion information associated with the vehicle to remove motion information associated with a map-matched road segment having a grade above a predefined measure.
5. The apparatus of any of clauses 1 through 4, wherein causing the apparatus to filter the motion information associated with the vehicle to establish baseline movement of the vehicle comprises causing the apparatus to:
   filter the motion information associated with the vehicle to remove motion information associated with a map-matched road segment determined to be subject to winds above a predetermined speed.
6. The apparatus of any of clauses 1 through 5, wherein causing the apparatus to cause the steering angle offset to be applied to the steering system of the vehicle comprises causing the apparatus to command compensation to the steering system of the vehicle in an amount of the steering angle offset.
7. The apparatus of any of clauses 1 through 6, wherein causing the apparatus to determine, from the steering angle input received at the vehicle, a steering angle offset comprises causing the apparatus to:
   determine steering input angle relative to zero degrees of steering input during the baseline movement of the vehicle.
8. The apparatus of any of clauses 1 through 7, wherein causing the apparatus to determine, from the location information, the map-matched road segment associated with the location information comprises causing the apparatus to:
   determine, from the location information, a most likely road segment as the map-matched road segment based on the location information, a speed of the vehicle, and a heading of the vehicle.
9. A method for monitoring a steering system of a vehicle comprising:
   receiving location information and motion information associated with a vehicle;
   determining, from the location information, a map-matched road segment associated with the location information;
   establishing a geometry of the map-matched road segment based on map data of a map database;
   filtering the motion information associated with the vehicle to establish a baseline movement of the vehicle;
   determining, during the baseline movement of the vehicle, steering angle input received at a steering system of the vehicle;
   determining, from the steering angle input received at the steering system of the vehicle, a steering angle offset; and
   causing the steering angle offset to be applied to the steering system of the vehicle.
10. The method of clause 9, further comprising:
   determining a need for an alignment service of the steering system in response to the steering angle offset satisfying a predetermined value.
11. The method of clauses 9 or 10, wherein filtering the motion information associated with the vehicle to establish the baseline movement of the vehicle comprises:
   filtering the motion information associated with the vehicle to remove motion information associated with a map-matched road segment having one or more turns along the map-matched road segment.
12. The method of any of clauses 9 through 11, wherein filtering the motion information associated with the vehicle to establish the baseline movement of the vehicle comprises:
   filtering the motion information associated with the vehicle to remove motion information associated with a map-matched road segment having a banking above a predefined measure.
13. The method of any of clauses 9 through 12, wherein filtering the motion information associated with the vehicle to establish the baseline movement of the vehicle comprises:
   filtering the motion information associated with the vehicle to remove motion information associated with a map-matched road segment determined to have winds in excess of a predetermined speed at a time of traversal of the map-matched road segment.
14. The method of any of clauses 9 through 13, wherein causing the steering angle offset to be applied to the steering system of the vehicle comprises commanding compensation to the steering system of the vehicle in an amount of the steering angle offset.
15. The method of any of clauses 9 through 14, wherein determining, from the steering angle input received at the vehicle, the steering angle offset comprises:
   determining steering input angle relative to zero degrees of steering input during the baseline movement of the vehicle.
16. The method of any of clauses 9 through 15, wherein determining, from the location information, the map-matched road segment associated with the location information comprises:
   determining, from the location information, a most likely road segment as the map-matched road segment based on the location information, a speed of the vehicle, and a heading of the vehicle.
17. A system for monitoring a steering system of a vehicle comprising a controller configured to:
   receive location information and motion information associated with a vehicle;
   determine, from the location information, a map-matched road segment associated with the location information;
   establish a geometry of the map-matched road segment based on map data of a map database;
   filter the motion information associated with the vehicle to establish baseline movement of the vehicle;
   determine, during the baseline movement of the vehicle, a steering angle input received at a steering system of the vehicle;
   determine, from the steering angle input received at the steering system of the vehicle, a steering angle offset; and
   cause the steering angle offset to be applied to the steering system of the vehicle.
18. The system of clause 17, wherein the controller is further configured to:
   provide an alert in response to the steering angle offset exceeding a predefined degree, wherein the alert comprises an indication of a need for an alignment service.
19. The system of clauses 17 or 18, further comprising a steering assist system, wherein the controller configured to cause the steering angle offset to be applied to the steering system of the vehicle comprises causing the steering assist system to compensate the steering system of the vehicle in an amount of the steering angle offset.
20. The system of any of clauses 17 through 19, wherein the steering assist system comprises at least one of a hydraulic mechanism or an electric mechanism to impart compensation to the steering system of the vehicle in an amount of the steering angle offset.

## Claims

1. A method for monitoring a steering system of a vehicle comprising:
receiving location information and motion information associated with a vehicle;
determining, from the location information, a map-matched road segment associated with the location information;
establishing a geometry of the map-matched road segment based on map data of a map database;
filtering the motion information associated with the vehicle to establish a baseline movement of the vehicle;
determining, during the baseline movement of the vehicle, steering angle input received at a steering system of the vehicle;
determining, from the steering angle input received at the steering system of the vehicle, a steering angle offset; and
causing the steering angle offset to be applied to the steering system of the vehicle.

2. The method of claim 1, further comprising:
determining a need for an alignment service of the steering system in response to the steering angle offset satisfying a predetermined value.

3. The method of claim 1 or 2, further comprising:
providing an indication of required maintenance in response to the steering angle offset satisfying a predetermined value.

4. The method of any preceding claim, wherein filtering the motion information associated with the vehicle to establish the baseline movement of the vehicle comprises:
filtering the motion information associated with the vehicle to remove motion information associated with a map-matched road segment having one or more turns along the map-matched road segment; or
filtering the motion information associated with the vehicle to remove motion information associated with a map-matched road segment having a curved profile.

5. The method of any preceding claim, wherein filtering the motion information associated with the vehicle to establish the baseline movement of the vehicle comprises:
filtering the motion information associated with the vehicle to remove motion information associated with a map-matched road segment having a banking or grade above a predefined measure.

6. The method of any preceding claim, wherein filtering the motion information associated with the vehicle to establish the baseline movement of the vehicle comprises:
filtering the motion information associated with the vehicle to remove motion information associated with a map-matched road segment determined to have winds in excess of a predetermined speed at a time of traversal of the map-matched road segment.

7. The method of any preceding claim, wherein causing the steering angle offset to be applied to the steering system of the vehicle comprises commanding compensation to the steering system of the vehicle in an amount of the steering angle offset.

8. The method of any preceding claim, wherein determining, from the steering angle input received at the vehicle, the steering angle offset comprises:
determining steering input angle relative to zero degrees of steering input during the baseline movement of the vehicle.

9. The method of any preceding claim, wherein determining, from the location information, the map-matched road segment associated with the location information comprises:
determining, from the location information, a most likely road segment as the map-matched road segment based on the location information, a speed of the vehicle, and a heading of the vehicle.

10. A system for monitoring a steering system of a vehicle comprising a controller configured perform the method of any preceding claim.

11. The system of claim 10, wherein the controller is further configured to:
provide an alert in response to the steering angle offset exceeding a predefined degree, wherein the alert comprises an indication of a need for an alignment service.

12. The system of claims 10 or 11, further comprising a steering assist system, wherein the controller configured to cause the steering angle offset to be applied to the steering system of the vehicle comprises causing the steering assist system to compensate the steering system of the vehicle in an amount of the steering angle offset.

13. The system of any of claims 10 through 12, wherein the steering assist system comprises at least one of a hydraulic mechanism or an electric mechanism to impart compensation to the steering system of the vehicle in an amount of the steering angle offset.

14. An apparatus including at least one processor and at least one non-transitory memory including computer program code instructions, the computer program code instructions configured to, when executed, cause the apparatus to perform the method of any of claims 1 to 9.
